# EUROPEAN PATENT APPLICATION

(11) **EP 4 516 632 A1**
(43) Date of publication of application: **05.03.2025**
(21) Application number: 24198467.3
(22) Date of filing: 04.09.2024
(51) Int. Cl.: B62B 9/14, B62B 7/14

(54) **COVER CONNECTION STRUCTURE AND CARRIER**

(30) Priority: 04.09.2023 CN 202311135488; 20.05.2024 CN 202410628028
(71) Applicant: Wonderland Switzerland AG, 6312 Steinhausen (CH)
(72) Inventor: WU, Haitao, Dongguan, Guangdong, 523648 (CN); CHEN, Yubin, Dongguan, Guangdong, 523648 (CN)
(74) Representative: Lucke, Andreas

(57) **Abstract**

The present disclosure relates to a cover connection structure (300) and a carrier. The carrier includes a frame (100), a cover assembly (200), and the cover connection structure (300). The cover connection structure (300) includes a fixing base (310) and an engaging member (320). The fixing base (310) is disposed on the frame (100). An engaging member (320) is disposed on the cover assembly (200). The fixing base (310) is movably engaged with the engaging member (320) to allow the cover assembly (200) to be detachably mounted onto the frame (100).

## Description

### TECHNICAL FIELD

The present disclosure relates to the technical field of carriers, and in particular to a cover connection structure and a carrier.

### BACKGROUND

Currently available carriers, such as strollers, generally include a frame and a cover that envelops the frame. The cover can enhance the comfort of infants while riding. However, the cover connection structures on existing carriers are often complex, making it difficult to disassemble the cover from the frame or to install the cover onto the frame.

### SUMMARY

In view of above, there is a need to provide a cover connection structure and a carrier. The cover connection structure and the carrier are simple in structure, making the detachment and the installation easy.

In an aspect of the present disclosure, a cover connection structure for a carrier is provided. The carrier includes a frame and a cover assembly. The cover connection structure includes:
a fixing base disposed on the frame; and
an engaging member disposed on the cover assembly;
wherein the fixing base is movably engaged with the engaging member to allow the cover assembly to be detachably mounted onto the frame.

In the above cover connection structure, the frame is provided with the fixing base, the cover assembly is provided with the engaging member, and the detachable mounting of the cover assembly onto the frame is achieved by the movable engagement of the fixing base with the engaging member. The cover connection structure is simple in structure, making the detachment and the installation easy.

In an embodiment, the fixing base is provided with a sliding groove, and the engaging member is insertable into the sliding groove.

In an embodiment, the sliding groove is provided with a protruding portion, the engaging member is provided with a recessed portion, and when the engaging member is inserted into the sliding groove, the protruding portion is engaged with the recessed portion.

In an embodiment, the sliding groove includes a first groove portion. Two second groove portions are respectively provided on two opposite side walls of the first groove portion. The first groove portion and the two second groove portions extend through one side of the fixing base to form a T-shaped insertion port. The engaging member is capable of being inserted into the sliding groove through the insertion port, with two opposite first edges of the engaging member respectively inserted into the two second groove portions.

In an embodiment, the first groove portion has an abutting edge opposite to the insertion port. The engaging member has two opposite second edges. Each of the second edges is connected between the two first edges. When the engaging member is inserted into the sliding groove, one of the second edges abuts against the abutting edge.

In an embodiment, the engaging member has a parallelogram sheet structure. The two first edges are parallel to each other, and the two second edges are parallel to each other.

In an embodiment, the engaging member has a connecting portion configured to be sewn to the cover assembly, and the engaging member is provided with a groove at the connecting portion configured to accommodate a sewing thread.

In an embodiment, one of the fixing base and the engaging member is provided with a limiting protrusion. The other one of the fixing base and the engaging member is provided with a mounting slot. One end of the mounting slot extends through the fixing base or the engaging member. The mounting slot is capable slidably sleeved outside the limiting protrusion to movable engage the fixing base with the engaging member.

In an embodiment, the fixing base is provided with the limiting protrusion. The limiting protrusion includes a first convex portion and a second convex portion connected to each other. The second convex portion protrude relative to a periphery of the first convex portion to form a limiting edge. The first convex portion is connected to the fixing base. The second convex portion and the fixing base are spaced apart to form a limiting concave portion.

The engaging member is provided with the mounting slot. The mounting slot includes a first groove body and a second groove body disposed on a periphery of the first groove body and in communication with the first groove body. Both the first groove body and the second groove body extend through one end of the engaging member to form a T-shaped mounting port. The engaging member is capable of being slidably sleeved outside the limiting protrusion through the mounting port.

When the mounting slot is engaged with the limiting protrusion, the limiting edge is positioned in the second groove body, and a side wall of the second groove body is positioned in the limiting concave portion.

In an embodiment, the first convex portion and the second convex portion each have a circular structure.

The first groove body and the second groove body each include an elongated first groove section and an arc-shaped second groove section. One end of the first groove section is in communication with the second groove section, and the other end of the first groove section forms the mounting port.

When the mounting slot is engaged with the limiting protrusion, the limiting edge is positioned in the second groove section of the second groove body, and the engaging member is capable rotating relative to the fixing base by rotating the limiting protrusion in the second groove section.

In an embodiment, the first convex portion and the second convex portion each have an elongated structure, and in extension directions of the first convex portion and the second convex portion, top ends of the first convex portion and the second convex portion are arc-shaped.

The first groove body and the second groove body each include an elongted first groove section and an arc-shaped second groove section. One end of the first groove section is in communication with the second groove section, and the other end of the first groove section forms the mounting port. The second groove section of the second groove body has an abutting edge opposite to the mounting port.

When the mounting slot is engaged with the limiting protrusion, the top end of the second convex portion abuts against the abutting edge, and the limiting edge is positioned in the first groove section and the second groove section of the second groove body.

In an embodiment, the first convex portion is provided with an inwardly concave notch. The notch is configured to engage with the limiting portion on the engaging member when the mounting slot is engaged with the limiting protrusion.

In an embodiment, the engaging member is provided with a limiting structure, and when the engaging member is operated to engage the mounting slot with the limiting protrusion, the limiting protrusion overcomes the limiting structure and moves from the mounting port into the mounting slot.

In an embodiment, the limiting structure includes:
a limiting portion disposed on one or both of opposite side walls of the first groove body; and
a hollow out portion provided at a position on the one or both of opposite side walls of the first groove body corresponding to the limiting portion, and when the limiting portion is pressed by the limiting protrusion, the limiting portion moves toward the hollow out portion, causing the limiting portion to elastically deform.

In an embodiment, the engaging member is further provided with a connecting perforation configured to allow a webbing to pass through. The webbing is connected to the cover assembly.

In another aspect of the present disclosure, a carrier is provided, including:
a frame;
a cover assembly covering the frame; and
a cover connection structure including:
a fixing base disposed on the frame; and
an engaging member disposed on the cover assembly;
wherein the fixing base is movably engaged with the engaging member to allow the cover assembly to be detachably mounted onto the frame.

In an embodiment, the frame is provided with a concave section, and the fixing base is mounted within the concave section.

In an embodiment, the fixing base is provided with a sliding groove, the engaging member can be inserted into the sliding groove, the fixing base includes mounting portions on two sides of the sliding groove, and the two mounting portions are respectively mounted within the concave sections through fasteners.

In an embodiment, the sliding groove has an insertion port and an abutting edge opposite to the insertion port, the engaging member can be inserted into the sliding groove through the insertion port, and the engaging member abuts against the abutting edge.

In an embodiment, the frame has a handlebar disposed obliquely to a horizontal plane, the fixing base is disposed on the handlebar, and the abutting edge extends along an inclination direction of the handlebar.

In an embodiment, the engaging member has a connecting portion, and the cover assembly is sewn to the connecting portion.

In an embodiment, the connecting portion is provided with a plurality of sewing holes, and a sewing thread passes through the cover assembly and the sewing holes to sew the cover assembly to the engaging member.

In an embodiment, the connecting portion is provided with a groove, and a sewing hole is provided at the bottom of the groove.

In an embodiment, the connecting portion is provided with a groove, and a sewing thread passes through the cover assembly and the bottom of the groove to sew the cover assembly to the engaging member.

In an embodiment, the engaging member has a parallelogram sheet structure and has two first edges parallel to each other and two second edges parallel to each other, the sliding groove has an insertion port and an abutting edge opposite to the insertion port, and when the engaging member is inserted into the sliding groove through the insertion port, one of the second edges abuts against the abutting edge.

In an embodiment, at least two connecting portions are provided, and the at least two connecting portions is disposed along a direction parallel to the first edge or the second edge.

In an embodiment, an angle between the first edge and the second edge adjacent to each other is greater than or less than 90 degrees, and the at least two connecting portions are disposed along the direction parallel to the second edge.

In an embodiment, the at least two connecting portions are at least partially misaligned in the direction parallel to the second edge.

In an embodiment, the frame has a handlebar and/or a push handle rod disposed obliquely to a horizontal plane, the fixing base is disposed on the handlebar and/or the push handle rod, and the first convex portion and the second convex portion extend along an inclination direction of the handlebar and/or the push handle rod.

In an embodiment, both sides of the cover assembly are each provided with the engaging member.

In an embodiment, the frame further includes a handlebar disposed obliquely to a horizontal plane, two ends of the handlebar are respectively connected to the seat member and a push handle assembly, and the fixing base is fixed to the handlebar.

### BRIEF DESCRIPTION OF THE DRAWINGS

FIG. 1 is a schematic structural view of a carrier according to a first embodiment of the present disclosure;
FIG. 2 is a schematic structural view at a position A of the carrier shown in FIG. 1 after a cover assembly is uncovered;
FIG. 3 is a schematic structural view of the carrier shown in FIG. 1 with the cover assembly removed;
FIG. 4 is a schematic structural view of a handlebar and a cover connection structure of the carrier shown in FIG. 3 and an enlarged view of a portion circled by dotted lines;
FIG. 5 is an exploded view of the handlebar and the cover connection structure shown in FIG. 4;
FIG. 6 is a cross-sectional perspective view taken along a line B-B of FIG. 4;
FIG. 7 is a schematic structural view of an engaging member in the cover connection structure shown in FIG. 5;
FIG. 8 is a schematic structural view of a carrier according to a second embodiment of the present disclosure, with a cover assembly removed;
FIG. 9 is an exploded view of a cover connection structure shown in FIG. 8;
FIG. 10 is an exploded view of the cover connection structure shown in FIG. 8 from another perspective;
FIG. 11 is a cross-sectional perspective view taken along a line C-C of FIG. 8;
FIG. 12 is a schematic structural view of a carrier according to a third embodiment of the present disclosure, with a cover assembly removed;
FIG. 13 is an exploded view of a cover connection structure shown in FIG. 12;
FIG. 14 is an exploded view of the cover connection structure shown in FIG. 12 from another perspective;
FIG. 15 is a cross-sectional perspective view taken along a line D-D of FIG. 12; and
FIG. 16 is a schematic structural view of a carrier according to a fourth embodiment of the present disclosure, with a cover assembly removed.

### Reference signs

100: frame, 110: handlebar, 111: concave section, 120: seat member, 130: push handle assembly, 131: push handle body, 132: push handle rod, 140: canopy bracket, 150: footrest, 160a: front leg support, 160b: rear leg support, 170: front wheel assembly, 180: rear wheel assembly, 190: support member,
200: cover assembly, 210: seat cover portion, 220: backrest cover portion, 230: first cover portion, 240: second cover portion,
300: cover connection structure, 310: fixing base, 311: fixing body, 312: mounting portion, 313: sliding groove, 3131: first groove portion, 3131a: abutting edge, 3132: second groove portion, 3133: insertion port, 314: protruding portion, 315: limiting protrusion, 3151: first convex portion, 31511: notch, 3152: second convex portion, 3153: limiting edge, 3154: limiting concave portion, 316: mounting hole;
320: engaging member, 321: first edge, 322: second edge, 323: recessed portion, 324: connecting portion, 325: groove, 3251: sewing hole, 326: mounting slot, 3261: first groove body, 3262: second groove body, 3263: mounting port, 3264a: first groove section, 3264b: second groove section, 327: limiting structure, 3271: limiting portion, 3272: hollow out portion, 328: connecting perforation, 329: rib, 3265: first wall body, 3266: second wall body, 3267: third wall body;
410: seat cushion, 420: back cushion.

### DETAILED DESCRIPTION

It is to be noted that when an element is referred to as being "fixed to" another element, it may be directly fixed to the other element or intervening elements may be present. When an element is referred to be "connected to" another element, it may be directly connected to the other element or intervening elements may be present. The terms "vertical", "horizontal", "left", "right" and similar expressions used herein are for illustrative purposes only and do not represent an only implementation.

Unless otherwise defined, all technical and scientific terms used herein have the same meaning as commonly understood by those of ordinary skill in the art to which the present disclosure belongs. The terms used in the specification of the present disclosure are intended only to describe specific embodiments and are not intended to limit the present disclosure. The term "and/or" used herein includes any and all combinations of one or more of the associated listed items.

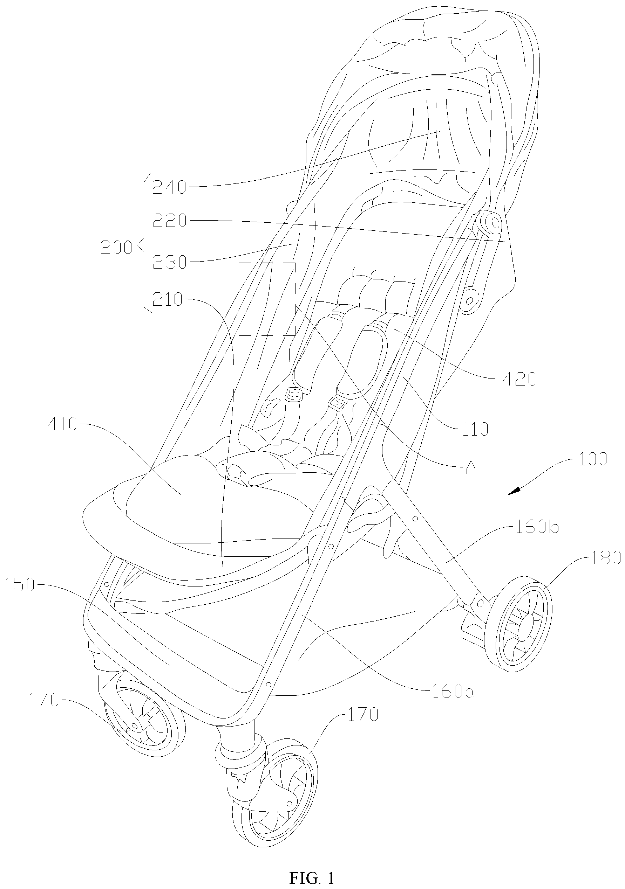

As shown in FIG. 1 to FIG. 3, a first embodiment of the present disclosure provides a carrier such as a stroller. The carrier includes a frame 100, a cover assembly 200, and a cover connection structure 300. In this embodiment, the cover assembly 200 may be, for example, a seat cloth. The cover connection structure 300 is disposed between the frame 100 and the cover assembly 200 to detachably install the cover assembly 200 onto the frame 100. The cover connection structure 300 and the carrier are simple in structure, making detachment and installation easy.

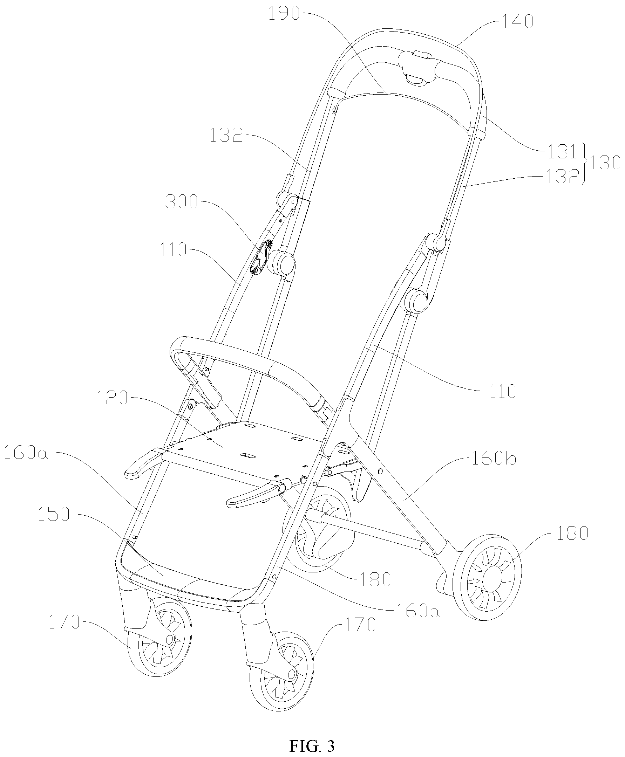

Specifically, as shown in FIG. 3, the frame 100 includes a handlebar 110, a seat member 120, a push handle assembly 130, a canopy bracket 140, a footrest 150, a front leg support 160a, and a rear leg support 160b. Both the seat member 120 and the canopy bracket 140 are connected to the push handle assembly 130, and the canopy bracket 140 is located above the seat member 120. The push handle assembly 130 has a structure generally in a shape of a U-shaped rod, including a push handle body 131 and two push handle rods 132 connected to two ends of the push handle body 131. Bottom ends of the two push handle rods 132 are respectively connected to opposite rear sides of the seat member 120. Two handlebars 110 are provided and are respectively disposed obliquely to a horizontal plane. Two front leg supports 160a are provided and are respectively disposed obliquely to the horizontal plane. Extension directions of the front leg support 160a and the handlebar 110 are substantially the same. Top ends of the two handlebars 110 are respectively connected to approximate middle portions of the two push handle rods 132. A bottom end of each handlebar 110 is connected to the front leg support 160a corresponding thereto. The footrest 150 is connected between the two front leg supports 160a. A bottom end of the footrest 150 is connected to two front wheel assemblies 170. The two front leg supports 160a are connected to opposite front sides of the seat member 120. The canopy bracket 140 also has a structure generally in a shape of a U-shaped rod. Two ends of the canopy bracket 140 are respectively connected to the top ends of the two handlebars 110. Two rear leg supports 160b are provided. Top ends of the two rear leg supports 160b are respectively connected to lower portions of the two handlebars 110, and bottom ends of the two rear leg supports 160b are respectively connected to two rear wheel assemblies 180. Further, the frame 100 may further include a backrest assembly (not shown, e.g., a backrest plate). The backrest assembly is connected to the seat member 120 or the handlebar 110. The angle of inclination of the backrest assembly relative to the seat member 120 may be adjusted, allowing the rider's back to rest against the backrest assembly at a comfortable incline.

Specifically, as shown in FIG. 1, the cover assembly 200 has a cloth structure, including a seat cover portion 210, a backrest cover portion 220, a first cover portion 230, and a second cover portion 240. Two first cover portions 230 are provided and are respectively connected to two sides of the backrest cover portion 220. The second cover portion 240 is connected to top sides of the two first cover portions 230 and a top side of the backrest cover portion 220. To achieve a connection between the cover assembly 200 and the frame 100, each first cover portion 230 in this embodiment is detachably connected to the corresponding handlebar 110, the seat cover portion 210 may be connected to the seat member 120, and a top side of the second cover portion 240 may be connected to a support member 190 through a zipper or the like. Certainly, in other embodiments, a connection position between the cover assembly 200 and the frame 100 may be adjusted according to an actual requirement. In this embodiment, the seat cover portion 210, the backrest cover portion 220, the first cover portions 230 on two sides, and the second cover portion 240 may be fixedly connected by sewing, so that the cover assembly 200 has a one-piece structure. Certainly, in other embodiments, the seat cover portion 210, the backrest cover portion 220, the first cover portions 230 on two sides, and the second cover portion 240 may be detachable from each other through zippers or other structures according to an actual requirement, which is not limited herein.

In order to improve the riding comfort level of the rider, the seat member 120 is provided with a seat cushion 410 thereon, and a back cushion 420 is connected to the seat cushion 410. When the cover assembly 200 is connected to the frame 100, the seat cover portion 210 is located below the seat cushion 410, the seat cushion 410 may be further fixed to the seat member 120, the backrest cover portion 220 is located behind the back cushion 420, and the back cushion 420 is provided with a tie-down protection structure (such as a safety belt).

It is to be noted that the seat cover portion 210 and the seat member 120 may be connected by sleeving a pocket (not shown) provided at the bottom of the front end of the seat cover portion 210 over the front end of the seat member 120. Additionally, the seat cushion 410 may be provided with a pocket (not shown) that further overlays and sleeves over the front ends of both the seat cover portion 210 and the seat member 120. Alternatively, the seat cushion 410 may be provided with other structures instead of the pocket to connect to the seat cover portion 210.

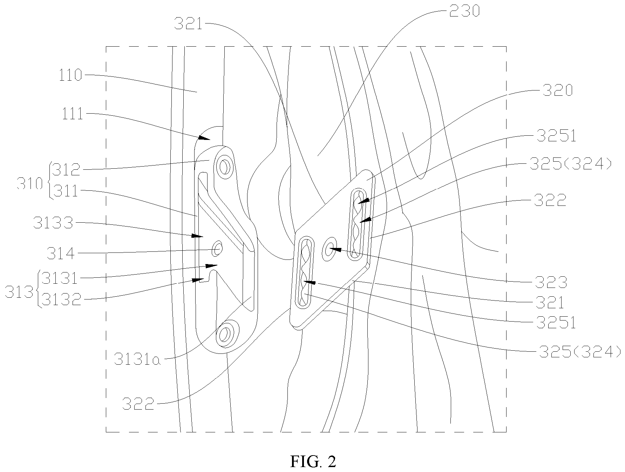

In this embodiment, as shown in FIG. 1 and FIG. 2, the cover connection structures 300 are provided between the two first cover portions 230 and the handlebars 110 at the corresponding sides thereto. Certainly, in other embodiments, the cover connection structure 300 is not limited to being provided between the first cover portion 230 and the handlebar 110, and may also be provided between, for example, the seat cover portion 210 and the seat member 120, or between the second cover portion 240 and the canopy bracket 140, among others, which is not limited in the present disclosure.

The following specific description will focus on one of the cover connection structures 300 as an example.

Specifically, as shown in FIG. 2, the cover connection structure 300 includes a fixing base 310 and an engaging member 320. The fixing base 310 is disposed on the frame 100. The engaging member 320 is disposed on the cover assembly 200. The engaging member 320 is movably engaged with the fixing base 310 so that the cover assembly 200 is detachably mounted on the fixing base 310. In this embodiment, the fixing base 310 is fixed to the handlebar 110, and the engaging member 320 is fixed to the first cover portion 230.

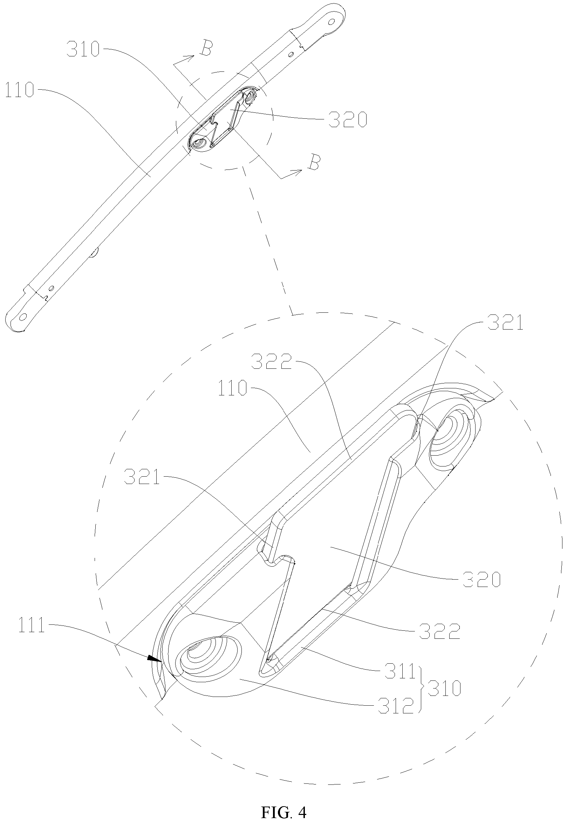

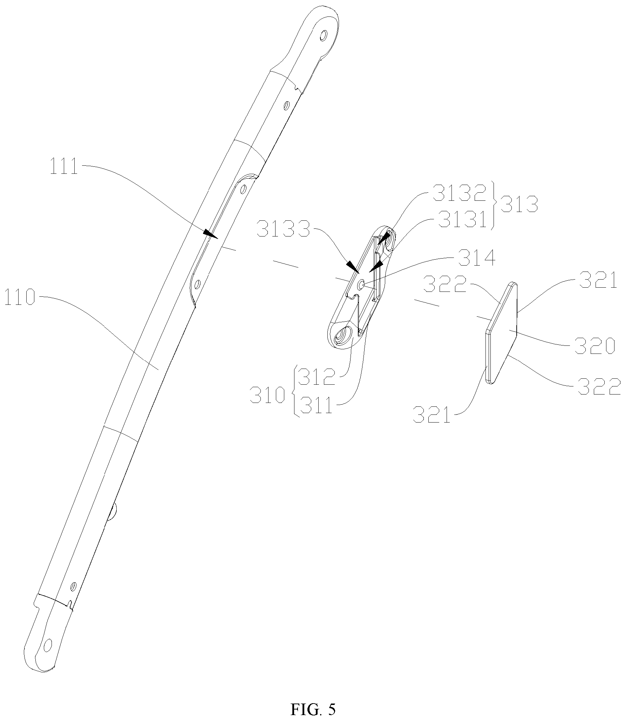

Further, as shown in FIG. 4 and FIG. 5, the fixing base 310 includes a fixing body 311 and mounting portions 312 connected to two sides of the fixing body 311. In this embodiment, the fixing base 310 is an integrally formed structure. In other embodiments, the fixing base 310 may alternatively be formed by connecting a fixing body 311 and mounting portions 312 on two sides that are independent from each other. The handlebar 110 is provided with a concave section 111 that matches a shape of the fixing base 310, and the fixing base 310 is mounted within the concave section 111, thereby minimizing the space the fixing base 310 occupies and contributing to a more streamlined and aesthetically pleasing design for the carrier as a whole. Specifically, the two mounting portions 312 of the fixing base 310 are respectively mounted in two concave sections 111 through fasteners (not shown).

Further, as shown in FIG. 2, FIG. 4, and FIG. 5, a side of the fixing body 311 facing away from the handlebar 110 is provided with a sliding groove 313. The sliding groove 313 includes a first groove portion 3131 and two second groove portions 3132 on two sides of the first groove portion 3131. The first groove portion 3131 is generally a parallelogram groove. One end of the first groove portion 3131 extends through an upper side of the fixing base 310. The first groove portion 3131 further has an abutting edge 3131a close to a lower side of the fixing base 310. In this embodiment, both the upper side of the fixing base 310 and the abutting edge 3131a extend along an extension direction of the handlebar 110 which is oblique to the horizontal plane. The other two opposite side walls of the first groove portion 3131 are generally perpendicular to the horizontal plane, and the second groove portions 3132 are provided on the two opposite side walls. The two second groove portions 3132 also extend through the upper side of the fixing base 310. That is, the first groove portion 3131 and the two second groove portions 3132 all extend through the upper side of the fixing base 310 to form a T-shaped insertion port 3133. The insertion port 3133 is disposed opposite to the abutting edge 3131a. The sliding groove 313 is provided with a protruding portion 314 therein. In this embodiment, the protruding portion 314 is provided at substantially a center of a groove surface of the first groove portion 3131 facing the engaging member 320.

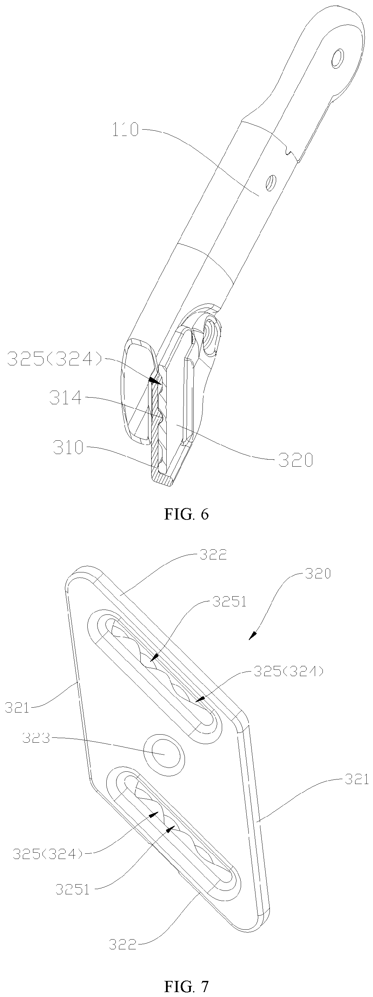

Further, as shown in FIG. 5 and FIG. 7, the engaging member 320 has a parallelogram sheet structure, and the engaging member 320 can be inserted into the sliding groove 313 to mount the cover assembly 200 onto the frame 100. The engaging member 320 may be made of a metal or plastic material. In this embodiment, both the engaging member 320 and the fixing base 310 are made of a plastic material, which are lighter in weight and lower in cost. In other embodiments, the engaging member 320 is made of a metal material, which has a high structural strength, thereby preventing the wear of the engaging member 320. The engaging member 320 includes two opposite first edges 321 and two opposite second edges 322. The two first edges 321 are parallel to each other, and the two second edges 322 are parallel to each other. An angle between the first edge 321 and the second edge 322 adjacent to each other is greater than or less than 90 degrees. Certainly, in other embodiments, the shape of the engaging member 320 is not limited to a parallelogram, and may alternatively be a trapezoid, a square, or other shapes, as long as the engaging member can be movably engaged with the fixing base 310, which is not limited in the present disclosure. A recessed portion 323 that can be engaged with the protruding portion 314 is further provided substantially in the middle of the engaging member 320.

As such, as shown in FIG. 4 to FIG. 6, when the cover assembly 200 is required to be fixed to the frame 100 and the engaging member 320 is inserted into the sliding groove 313 through the insertion port 3133, the two opposite first edges 321 of the engaging member 320 are respectively inserted into the two second groove portions 3132. As the engaging member 320 is inserted, the engaging member 320 is firstly pressed by the protruding portion 314 and deforms to some extent. When the engaging member 320 is inserted in place, that is, when one of the second edges 322 of the engaging member 320 abuts against the abutting edge 3131a, the protruding portion 314 of the fixing base 310 and the recessed portion 323 of the engaging member 320 are exactly engaged with each other, and the engaging member 320 returns to its original shape. After the engaging member 320 is engaged in place, at least a part of the engaging member 320 is exposed above the insertion port 3133, thereby facilitating the detachment of the cover assembly 200.

When the cover assembly 200 is required to be detached from the frame 100, the part of the engaging member 320 exposed above the insertion port 3133 may be grasped and pulled upward to remove the engaging member 320. In the process of removing the engaging member 320, the engaging member 320 presses against the protruding portion 314 and deforms to some extent, so that the engaging member 320 can be withdrawn from the sliding groove 313 under an external force. When the engaging member 320 is completely withdrawn from the sliding groove 313, the engaging member 320 returns to its original shape. In this way, the detachment of the cover assembly 200 from the frame 100 is realized, thereby facilitating cleaning or replacement of the cover assembly 200.

In this embodiment, the insertion port 3133 is located on an upper side of the abutting edge 3131a, which helps prevent the engaging member 320 from sliding out of the insertion port 3133 during the use of the cover connection structure 300. Certainly, in other embodiments, on the premise of ensuring tightness of the engagement between the engaging member 320 and the fixing base 310, the insertion port 3133 may alternatively be located at another position such as on a left side or a lower side of the abutting edge 3131a.

In other embodiments not shown, the positions of the protruding portion 314 and the recessed portion 323 may alternatively be interchanged. That is, the protruding portion 314 may be provided on the engaging member 320, and the recessed portion 323 may be provided on the fixing base 310.

Further, as shown in FIG. 2 and FIG. 7, the engaging member 320 is fixed to the cover assembly 200 by sewing. Specifically, the engaging member 320 is provided with a connecting portion 324, and the cover assembly 200 is sewn with the connecting portion 324. In this embodiment, the engaging member 320 is provided with two connecting portions 324, and the two connecting portions 324 are respectively located on upper and lower sides of the recessed portion 323. That is, the two connecting portions 324 are respectively disposed proximate to the two second edges 322 of the engaging member 320. In this embodiment, the two connecting portions 324 are parallel to the two second edges 322 of the engaging member 320, and lengths of the two connecting portions 324 are substantially equal. The two connecting portions 324 are at least partially misaligned in a direction parallel to the second edge 322. In this way, a stress-bearing region of the sewing thread can be increased, and firmness of the connection of the engaging member 320 can be improved.

Further, each of the two connecting portions 324 is provided with an elongated groove 325. The sewing thread can be accommodated in the groove 325, which prevents the groove surface of the first groove portion 3131 from being spaced apart from the surface of the engaging member 320, thereby ensuring that the engagement between the protruding portion 314 and the recessed portion 323 is not affected. In addition, as shown in FIG. 4 and FIG. 5, a surface of the engaging member 320 in this embodiment fitting the cover assembly 200 is a flat surface. In this way, through the arrangement of the groove 325, a thickness of the engaging member 320 at the two connecting portions 324 can be reduced, which saves manufacturing costs on the one hand, and facilitates threading of the sewing thread on the other hand, thereby facilitating the connection of the engaging member 320 with the first cover portion 230 or other cover assemblies 200. As shown in FIG. 2, the connecting portion 324 of the engaging member 320 is provided with a plurality of sewing holes 3251. It is to be noted that, if the engaging member 320 is thicker or made of a hard material (such as a metal material), a plurality of sewing holes 3251 may be provided in the connecting portion 324 in advance before the connecting portion 324 is sewn with the cover assembly 200, which facilitates the sewing thread to pass through the cover assembly 200 and the sewing hole 3251 to sew the cover assembly 200 with the engaging member 320. If the thickness and the material of the engaging member 320 allow a needle (not shown) to pierce through the engaging member 320, for example, if the engaging member is made of a plastic material, the sewing hole 3251 may not be provided in advance. The sewing thread may directly pass through the cover assembly 200 and the bottom of the groove 325 through the needle (not shown) to sew the cover assembly 200 with the engaging member 320.

In other embodiments not shown, more than two or fewer than two connecting portions 324 may be provided. The two connecting portions 324 may alternatively be disposed proximate to the two first edges 321 of the engaging member 320 and extend along a direction parallel to the two first edges 321, or the two connecting portions 324 may be disposed in a cross shape, which is not limited in the present disclosure.

In this embodiment, lengths of the two connecting portions 324 are substantially the same, and distances between two ends of the two connecting portions 324 and the two first edges 321 are substantially the same. Since the two second edges 322 are at least partially misaligned, the two connecting portions 324 are at least partially misaligned in a direction parallel to the second edge 322. In other embodiments not shown, the lengths of the two connecting portions 324 may alternatively be different. Alternatively, in an embodiment where the engaging member 320 is in a shape of a square, the two connecting portions 324 are at least partially misaligned by making the lengths of the two connecting portions 324 different or making distances between the two connecting portions 324 and square edges different.

It is to be noted that, in this embodiment, at least one cover connection structure 300, such as one, two, or three, is provided between the two first cover portions 230 and a part of the frame 100 on corresponding sides thereof. When a plurality of cover connection structures 300 are provided, the cover connection structures 300 are disposed at intervals, which helps improve stability and reliability of the connection of the first cover portion 230 to the frame 100. At the same time, the first cover portion 230 is smoother after being connected to the frame 100, which helps improve ornamental appearance of the carrier.

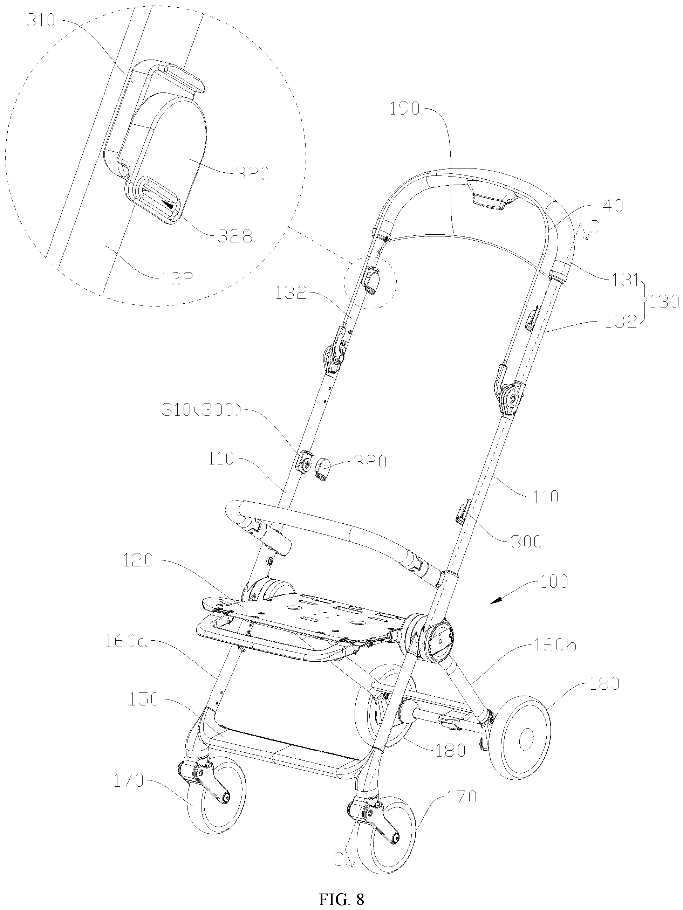

FIG. 8 is a perspective view of a carrier provided according to a second embodiment of the present disclosure, with the cover assembly 200 removed. The carrier may include a frame 100, a cover assembly 200 (which can be referred to the relevant drawings in the first embodiment), and a cover connection structure 300. The carrier in this embodiment is a variation of the carrier in the first embodiment above. Unless there is a contradiction, structures of the components and the connection relationships between the components in this embodiment can be referred to the description in the first embodiment above. The following mainly describes the differences between this embodiment and the first embodiment above.

Referring to FIG. 8, compared to the first embodiment, in this embodiment, the frame 100 is varied, and the difference mainly lies in that the structure and the connection relationship of the push handle assembly 130 are slightly different. Specifically, the push handle assembly 130 also includes a push handle body 131 and two push handle rods 132 connected to two ends of the push handle body 131, however, unlike the first embodiment, the bottom ends of the two push handle rods 132 are not respectively connected to the opposite rear sides of the seat member 120. Instead, in this embodiment, the bottom ends of the two push handle rods 132 are respectively connected to top ends of the handlebars 110 on corresponding sides. When the frame 100 is in an unfolded state, the angles between the two push handle rods 132 and the handlebars 110 on the corresponding sides are approximately 180 degrees. In other words, the two push handle rods 132 may be regarded as extending along the same straight line as the handlebars 110 on the corresponding sides.

Referring to FIG. 8 to FIG. 10, the cover connection structure 300 is further varied in this embodiment. Similarly, the following specific description is focused on one of the cover connection structures 300 as an example.

In this embodiment, the cover connection structure 300 includes a fixing base 310 and an engaging member 320. The fixing base 310 is also disposed on the frame 100. The engaging member 320 is also disposed on the cover assembly 200. In an embodiment, one of the fixing base 310 and the engaging member 320 is provided with a limiting protrusion 315, the other one of the fixing base 310 and the engaging member 320 is provided with a mounting slot 326, and one end of the mounting slot 326 extends through the fixing base 310 or the engaging member 320. In this way, the mounting slot 326 slidably sleeves outside the limiting protrusion 315 to movable engage the engaging member 320 with the fixing base 310.

It is to be noted that "one of the fixing base 310 and the engaging member 320 is provided with a limiting protrusion 315, the other one of the fixing base 310 and the engaging member 320 is provided with a mounting slot 326" includes two embodiments. For example, when the fixing base 310 is provided with the limiting protrusion 315, the engaging member 320 is provided with the mounting slot 326, and one end of the mounting slot 326 extends through the engaging member 320. Alternatively, when the engaging member 320 is provided with the limiting protrusion 315, the fixing base 310 is provided with the mounting slot 326, and one end of the mounting slot 326 extends through the fixing base 310. Regardless of whether the fixing base 310 is provided with the limiting protrusion 315 or the mounting slot 326, the mounting slot 326 or the limiting protrusion 315 on the engaging member 320 can be engaged with the limiting protrusion 315 or the mounting slot 326 on the fixing base 310.

Specifically, in this embodiment, the fixing base 310 is provided with the limiting protrusion 315, the engaging member 320 is provided with the mounting slot 326, and one end of the mounting slot 326 extends through the engaging member 320 to form a mounting port 3263. In this way, the engaging member 320 can be slidably sleeved outside the limiting protrusion 315 through the mounting port 3263 by the mounting slot 326, thereby detachably connecting the engaging member 320 to the fixing base 310 and finally detachably mount the cover assembly 200 to onto the frame 100.

It is to be noted that, compared to the first embodiment, in this embodiment, the concave section 111 may be omitted from the frame 100, instead, the fixing base 310 is provided with a mounting hole 316 and is directly mounted to the frame 100 by a fastener passing through the mounting hole 316. Certainly, in other embodiments, similar to what is shown in the first embodiment, the frame 100 is also provided with the concave section 111 at a position wherein it connects with the fixing base 310, and the mounting hole 316 in the fixing base 310 is configured to allow a fastener to pass through to mount the fixing base 310 within the concave section 111 of the frame 100.

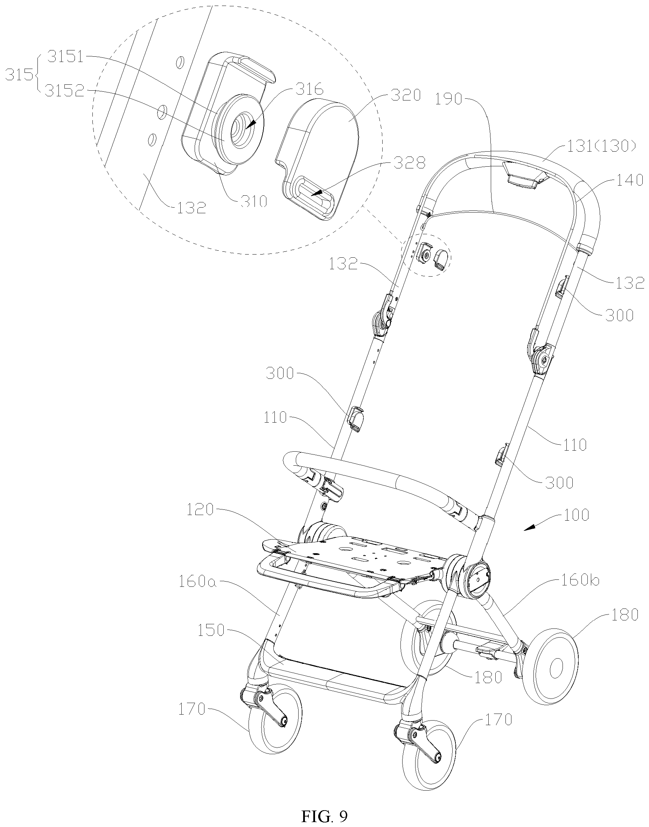

Referring to FIG. 8 and FIG. 9, in this embodiment, the engaging member 320 is provided with a connecting perforation 328 that is configured to allow a webbing (not shown in the figure) to pass through, and the webbing passed through the connecting perforation 328 is configured to be connected to the cover assembly 200. It is to be noted that the webbing passed through the connecting perforation 328 may be securely connected or detachably connected to the cover assembly 200. For example, when the webbing is securely connected to the cover assembly 200, the connection manner of the two includes, but is not limited to, sewing or glue bonding. By taking sewing as an example, one end of the webbing passed through the connecting perforation 328 is overlapped with the other end of the webbing, and then the two ends of the webbing are sewn and connected to the cover assembly 200. In another example, when the webbing is detachably connected to the cover assembly 200, the connection manner of the two includes, but is not limited to, tying the webbing to the cover assembly 200 or using other connection structures (such as a pair of snap buttons or a pair of adhesive buckles). Certainly, in other embodiments, the engaging member 320 may alternatively be provided with the connecting portion 324 in the first embodiment above, with the connecting perforation 328 omitted. In this way, the connection of the engaging member 320 with the cover assembly 200 can also be achieved.

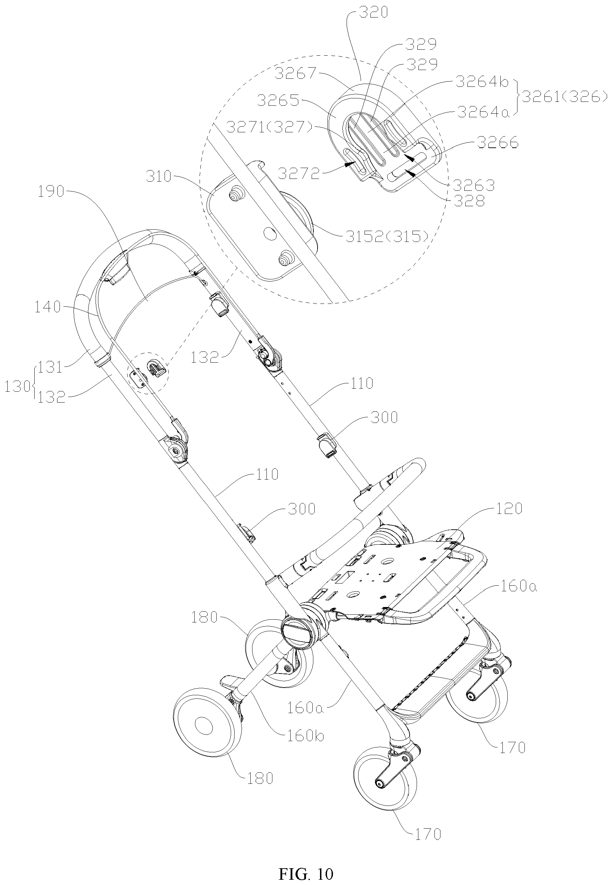

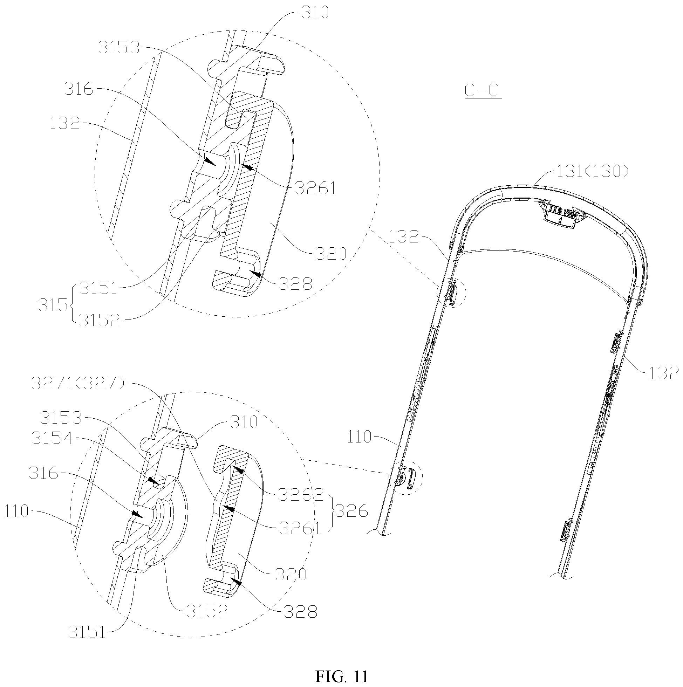

Referring to FIG. 9 and FIG. 10, in an embodiment, the shape of the connecting perforation 328 is not limited, which may be a circular hole, a waist-shaped hole, or the like. In addition, the position of the connecting perforation 328 on the engaging member 320 is not specifically limited. For example, the connecting perforation 328 may be located at a lower end portion of the engaging member 320 and proximate to the mounting port 3263. When the connecting perforation 328 is a waist-shaped hole, an extension direction of the connecting perforation 328 intersects with a sliding direction of the limiting protrusion 315 relative to the mounting slot 326. Referring to FIG. 9 to FIG. 11, in an embodiment, the limiting protrusion 315 includes a first convex portion 3151 and a second convex portion 3152 connected to each other. The second convex portion 3152 protrudes relative to a periphery of the first convex portion 3151 to form a limiting edge 3153. The first convex portion 3151 is connected to the fixing base 310. The second convex portion 3152 and the fixing base 310 are spaced apart to form a limiting concave portion 3154. In an embodiment, the mounting slot 326 includes a first groove body 3261 and a second groove body 3262 disposed on a periphery of the first groove body 3261 and in communication with the first groove body 3261. Both the first groove body 3261 and the second groove body 3262 extend through one end of the engaging member 320 to form a T-shaped mounting port 3263. Specifically, the mounting slot 326 has a first wall body 3265, a second wall body 3266, and a third wall body 3267. The first wall body 3265 and a second wall body 3266 are opposite to and spaced apart in a direction perpendicular to a sliding direction of the limiting protrusion 315. The first wall body 3265 is located at a side of the second wall body 3266 close to the fixing base 310. The third wall body 3267 extends in the direction perpendicular to the sliding direction of the limiting protrusion 315 to connect the first wall body 3265 and the second wall body 3266. The first groove body 3261 extends through the first wall body 3265 in the direction perpendicular to the sliding direction of the limiting protrusion 315. The second groove body 3262 is defined by the first wall body 3265, the second wall body 3266, and the third wall body 3267 together. In this way, when the mounting slot 326 is engaged with the limiting protrusion 315, the limiting edge 3153 is positioned in the second groove body 3262, and a side wall (i.e., the first wall body 3265) of the second groove body 3262 is located in the limiting concave portion 3154. In this way, the limiting protrusion 315 can exit the mounting slot 326 only from the mounting port 3263, which can prevent detachment of the engaging member 320 from the fixing base 310 along a protruding direction of the limiting protrusion 315 after the two are connected.

It is to be noted that the first convex portion 3151 and the second convex portion 3152 may be fixedly connected, such as integrally formed, welded, or bonded. Certainly, the first convex portion 3151 and the second convex portion 3152 may alternatively be detachably connected, such as engaged. Similarly, the connection relationship between the first convex portion 3151 and the fixing base 310 may be referred to the connection relationship between the first convex portion 3151 and the second convex portion 3152, which is not specifically limited herein.

It is to be noted that, in this embodiment, the mounting port 3263 is oriented downwards along a length direction of the push handle rod 132 or the handlebar 110. Certainly, in other embodiments, on the premise of ensuring tightness of the engagement between the engaging member 320 and the fixing base 310, the mounting port 3263 may alternatively be oriented in another directions, for example, oriented forward or backward along the movement direction of the carrier.

Specifically, in this embodiment, the first convex portion 3151 and the second convex portion 3152 each have a circular structure, so that the limiting edge 3153 and the limiting concave portion 3154 each have a ring-shaped structure. The first groove body 3261 and the second groove body 3262 each include an elongated first groove section 3264a and an arc-shaped second groove section 3264b, with one end of the first groove section 3264a in communication with the second groove section 3264b, and the other end of the first groove section 3264a forming the above mounting port 3263. More specifically, the first groove section 3264a of the first groove body 3261 is in communication with the second groove section 3264b of the first groove body 3261, the first groove section 3264a of the second groove body 3262 is in communication with the second groove section 3264b of the second groove body 3262, the first groove section 3264a of the first groove body 3261 is in communication with the first groove section 3264a of the second groove body 3262, the second groove section 3264b of the first groove body 3261 is in communication with the second groove section 3264b of the second groove body 3262, and the first groove section 3264a of the first groove body 3261 and the first groove section 3264a of the second groove body 3262 collectively form the mounting port 3263 with a T-shaped cross section. In this way, when the engaging member 320 is engaged with the limiting protrusion 315 on the fixing base 310 through the mounting slot 326, the limiting edge 3153 is limited in the second groove section 3264b of the second groove body 3262, and the first convex portion 3151 is positioned in the second groove section 3264b of the first groove body 3261.

More specifically, the first wall body 3265, the second wall body 3266, and the third wall body 3267 each include an elongated wall portion and an arc-shaped wall portion. The first groove section 3264a of the first groove body 3261 extends through the elongated wall portion of the first wall body 3265 in a direction perpendicular to the sliding direction of the limiting protrusion 315, and the second groove section 3264b of the first groove body 3261 extends through the arc-shaped wall portion of the first wall body 3265 in a direction perpendicular to the sliding direction of the limiting protrusion 315. The elongated wall portions of the first wall body 3265, the second wall body 3266, and the third wall body 3267 collectively define the first groove section 3264a of the second groove body 3262. The arch-shaped wall portions of the first wall body 3265, the second wall body 3266, and the third wall body 3267 collectively define the second groove section 3264b of the second groove body 3262.The engaging member 320 can be caused to rotate relative to the fixing base 310 by rotating the limiting protrusion 315 in the second groove sections 3264b of the first groove body 3261 and the second groove body 3262. In other words, after the engaging member 320 is connected to the fixing base 310, the engaging member 320 can be operated to rotate relative to the fixing base 310. Specifically, the engaging member 320 may rotate relative to the fixing base 310 around a central axis of the second convex portion 3152. When the first cover portion 230 is connected to the frame 100, the first cover portion 230 may be adjusted by rotating the engaging member 320 to eliminate the distortion of the first cover portion 230. As can be seen, as the engaging member 320 is rotatable relative to the fixing base 310, the flexibility of the fixed connection of the first cover portion 230 is improved. When the inclination angle of the backrest is adjusted, the cover assembly 200 may be moved with the backrest, and a part of the cover assembly 200 connected to the engaging member 320 may rotate to some extent. In this case, the engaging member 320 can rotate relative to the fixing base 310 to reduce the twisting and wrinkling of the cover assembly 200 at the engaging member 320.

It is to be noted that, in this embodiment, the first convex portion 3151 and the second convex portion 3152 are coaxially disposed. That is, central axes of the two are collinear. In addition, the above mounting hole 316 sequentially extends through the first convex portion 3151, the second convex portion 3152, and the fixing base 310, and an axis of the mounting hole 316 is located on the central axes of the first convex portion 3151 and the second convex portion 3152. In addition, an arc-center distance of the second groove section 3264b of the second groove body 3262 is greater than or equal to a radius of the second convex portion 3152, and an arc-center distance of the second groove section 3264b of the first groove body 3261 is greater than or equal to a radius of the first convex portion 3151. This facilitates the second convex portion 3152 to enter the second groove section 3264b of the second groove body 3262, and facilitate the first convex portion3151 to enter the second groove section 3264b of the first groove body 3261.

Referring to FIG. 10, in an embodiment, the engaging member 320 is provided with a limiting structure 327. When the engaging member 320 is operated to engage the mounting slot 326 with the limiting protrusion 315, the limiting protrusion 315 overcomes the limiting structure 327 to move from the mounting port 3263 into the mounting slot 326. Specifically, the limiting structure 327 includes a limiting portion 3271 and a hollowed-out portion 3272. The limiting portion 3271 is disposed on one or both of opposite side walls of the first groove body 3261. More specifically, a surface of the first wall body 3265 facing the first groove body 3261 may be formed with the limiting portion 3271, and the limiting portion 3271 may be in a form of a limiting convex formed on the surface of the first wall body 3265 facing the first groove body 3261. The hollow out portion 3272 is provided at a position on one or both of opposite side walls of the first groove body 3261 corresponding to the limiting portion 3271. More specifically, the hollow out portion 3272 is formed on a side of the first wall body 3265 facing the fixing base 310, and extends through the first wall body 3265 in a direction perpendicular to the sliding direction of the limiting protrusion 315. When the limiting portion 3271 is pressed by the limiting protrusion 315, the limiting portion 3271 moves toward the hollow out portion 3272, causing the limiting portion 3271 to elastically deform and the hollow out portion 3272 to become smaller.

Specifically, in this embodiment, two limiting portions 3271 are provided, and the two limiting portions 3271 are respectively located on two opposite side walls of the first groove section 3264a of the first groove body 3261, more specifically, on two opposite surfaces of the first wall body 3265 facing the first groove body 3261. In addition, along a width direction of the mounting port 3263, two sides of the mounting port 3263 are each provided with the hollow out portion 3272. When the engaging member 320 is required to be connected to the fixing base 310, the mounting port 3263 of the engaging member 320 is caused to be aligned with the limiting protrusion 315, and then the engaging member 320 is operated (such as pushed or pulled) in an obliquely downward direction. In this way, the engaging member 320 can move relative to the fixing base 310, that is, the limiting protrusion 315 can move relative to the engaging member 320 from the mounting port 3263 to the interior of the mounting slot 326. In the process of the limiting protrusion 315 entering the mounting slot 326, the second convex portion 3152 is firstly inserted into the first groove section 3264a of the second groove body 3262, while the first convex portion 3151 is inserted into the first groove section 3264a of the first groove body 3261. When the first convex portion 3151 presses against the two limiting portions 3271, the limiting portions 3271 gradually move toward the hollow out portion 3272 such that the limiting portions 3271 elastically deforms, and the hollow out portion 3272 provides a space required for the movement of the limiting portions 3271. When the first convex portion 3151 crosses the first groove section 3264a and enters the second groove section 3264b, the two limiting portions 3271 are reset to limit the first convex portion 3151 in the second groove section 3264b of the first groove body 3261. In this way, after the engaging member 320 is connected to the fixing base 310, when there is no external force or the external force is small, the engaging member 320 and the fixing base 310 may be kept relatively fixed, preventing easy withdrawal of the limiting protrusion 315 from the mounting slot 326 through the mounting port 3263. When the engaging member 320 is required to be detached from the fixing base 310, the engaging member 320 may be pushed or pulled in the opposite direction (that is, generally in an obliquely upward direction), so that the limiting protrusion 315 can be withdrawn from the mounting port 3263 of the mounting slot 326 in the process of the engaging member 320 moving relative to the fixing base 310. In this process, the first convex portion 3151 presses against the limiting portion 3271 again to cause the limiting portion 3271 to gradually move toward the hollow out portion 3272 such that the limiting portion 3271 deforms to some extent. After the first convex portion 3151 crosses the limiting portion 3271, the hollow out portion 3272 and the limiting portion 3271 are reset to original shapes and positions.

Still referring to FIG. 10, in an embodiment, a side of the engaging member 320 facing the mounting slot 326 is provided with a rib 329. The rib 329 is disposed on, for example, a surface of the first wall 3265 facing the fixing base 310. When the engaging member 320 slidably sleeves outside the limiting protrusion 315 through the mounting slot 326, the rib 329 on the engaging member 320 ensures that the engaging member 320 can be in close contact with an end face of the limiting protrusion 315 (that is, the end face of the second convex portion 3152 facing away from the fixing base 310). The rib 329 can effectively prevent the problem of unstable engagement between the fixing base 310 and the engaging member 320 that may be caused when the end face of the limiting protrusion 315 and a wall of the mounting slot 326 do not fully fit. In other words, the rib 329 can effectively improve reliability of engagement of the engaging member 320 with the limiting protrusion 315.

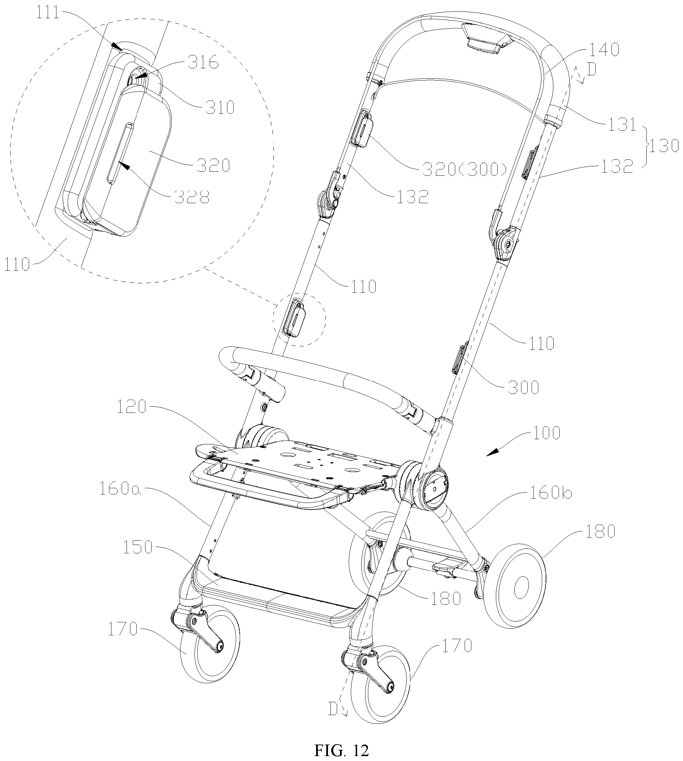

In an embodiment, the above cover connection structures 300 are provided between the two first cover portions 230 and the handlebars 110 and/or the push handle rods 132 on corresponding sides thereto. Specifically, in this embodiment, as shown in FIG. 8, the cover connection structures 300 are provided between the two first cover portions 230 and both the handlebars 110 and the push handle rods 132 on corresponding sides thereto. In this way, reliability of the connection between the first cover portion 230 and the frame 100 can be improved, the first cover portion 230 is smoother after being connected to the frame 100, which helps improve ornamental appearance of the carrier. FIG. 12 is a perspective view of a carrier provided according to a third embodiment of the present disclosure, with the cover assembly 200 removed. The carrier may include a frame 100, a cover assembly 200 (which can be referred to the relevant drawings in the first embodiment), and a cover connection structure 300. The carrier in this embodiment is a variation of the carrier in the second embodiment above. Unless there is a conflict, structures of the components and the connection relationships between the components in this embodiment can be referred to the description in the second embodiment above. The following mainly describes the differences between this embodiment and the second embodiment above.

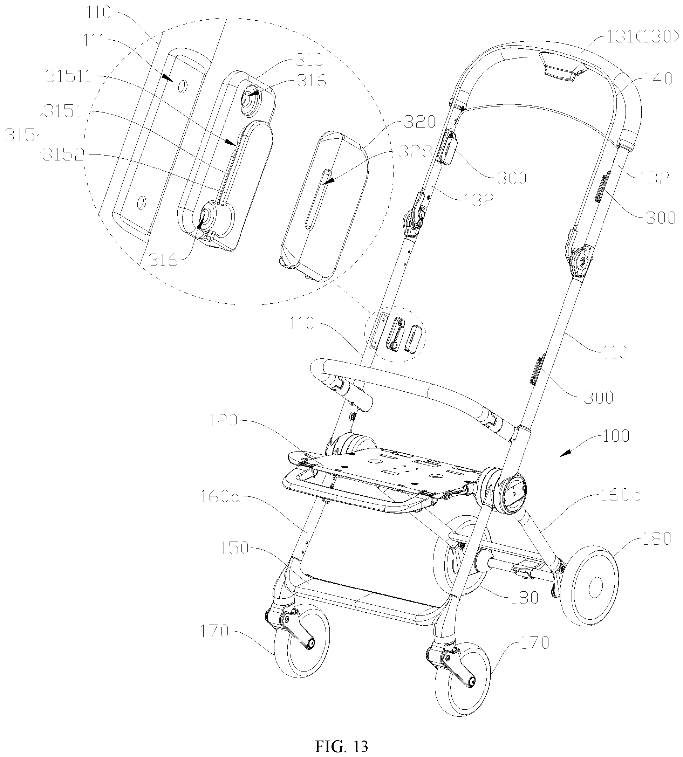

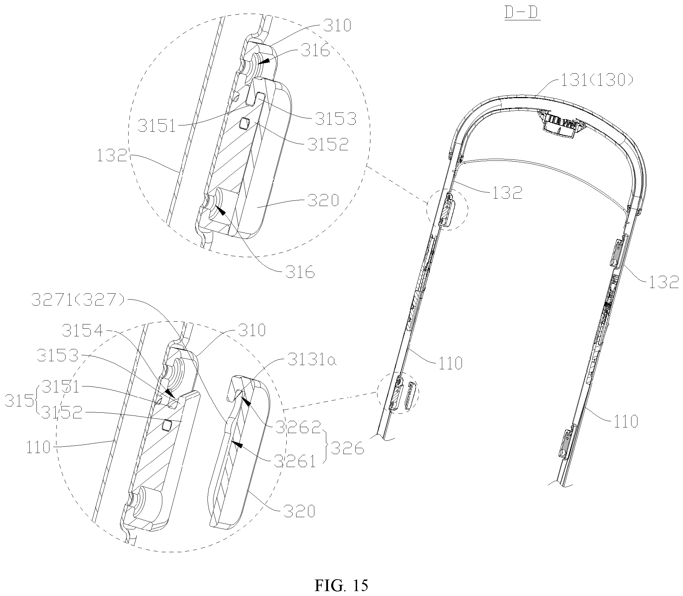

Referring to FIG. 13 to FIG. 15, in this embodiment, the first convex portion 3151 and the second convex portion 3152 each have an elongated structure. The first convex portion 3151 and the second convex portion 3152 each extend along a length direction of the handlebar 110 and/or the push handle rod 132. In the extension directions of the first convex portion 3151 and the second convex portion 3152, top ends of the first convex portion 3151 and the second convex portion 3152 are arc-shaped. The second groove section 3264b of the second groove body 3262 has an abutting edge 3131a opposite to the mounting port 3263. When the mounting slot 326 is engaged with the limiting protrusion 315, the top end of the second convex portion 3152 abuts against the abutting edge 3131a, and the limiting edge 3153 is limited in the first groove section 3264a and the second groove section 3264b of the second groove body 3262. Specifically, in this embodiment, the abutting edge 3131a is arc-shaped, with a curvature that matches a curvature of an outer edge of the top end of the second convex portion 3152. The top ends of the first convex portion 3151 and the second convex portion 3152 are arc-shaped, which facilitates quick and accurate insertion of the limiting protrusion 315 into the mounting slot 326 through the mounting port 3263, improving the rapidness of the connection between the engaging member 320 and the fixing base 310. In addition, as the top end of the first convex portion 3151 is arc-shaped, in the case of abutment against the limiting portion 3271, it is conducive to improving smoothness of the movement of the limiting portion 3271 in the direction close to the hollow out portion 3272. It is to be noted that, in other embodiments, the second groove section 3264b may be in other shapes, for example, both the second groove section 3264b and the first groove section 3264a have an elongated structure, which is not specifically limited herein. In order to ensure stability of the engagement of the limiting protrusion 315 with the mounting slot 326 and prevent easy detachment of the engaging member 320 from the fixing base 310, in this embodiment, as shown in FIG. 13, the first convex portion 3151 is provided with an inwardly concave notch 31511. When the mounting slot 326 is engaged with the limiting protrusion 315, the notch 31511 is configured to be in engagement fit with the limiting portion 3271 of the limiting structure 327.

In the process of the limiting protrusion 315 entering the mounting slot 326, the second convex portion 3152 is firstly inserted into the first groove section 3264a of the second groove body 3262, while the first convex portion 3151 is inserted into the first groove section 3264a of the first groove body 3261. When the first convex portion 3151 presses against the two limiting portions 3271, the limiting portions 3271 gradually move toward the hollow out portion 3272 such that the limiting portions 3271 elastically deforms, wherein the hollow out portion 3272 provides a required space for the movement of the limiting portions 3271. When the engaging member 320 moves in place, that is, when the abutting edge 3131a of the second groove body 3262 on the engaging member 320 abuts against the top end of the second convex portion 3152, the limiting portion 3271 on the side wall of the first groove body 3261 and the notch 31511 on the first convex portion 3151 are just engaged with each other, at the same time, the limiting portion 3271 and the hollow out portion 3272 are both reset to original positions and shapes. In this way, after the engaging member 320 is connected to the fixing base 310, when there is no external force or the external force is small, the engaging member 320 and the fixing base 310 may be kept relatively fixed, preventing easy withdrawal of the limiting protrusion 315 from the mounting slot 326 through the mounting port 3263. Similarly, in the process of detaching the engaging member 320 from the fixing base 310, the first convex portion 3151 in the movement pushes the limiting portion 3271 to gradually move toward the hollow out portion 3272 such that the limiting portion 3271 is withdrawn from the notch 31511. Once the first convex portion 3151 is disengaged from the limiting portion 3271, both the hollow out portion 3272 and the limiting portion 3271 can return to their original shapes and positions.

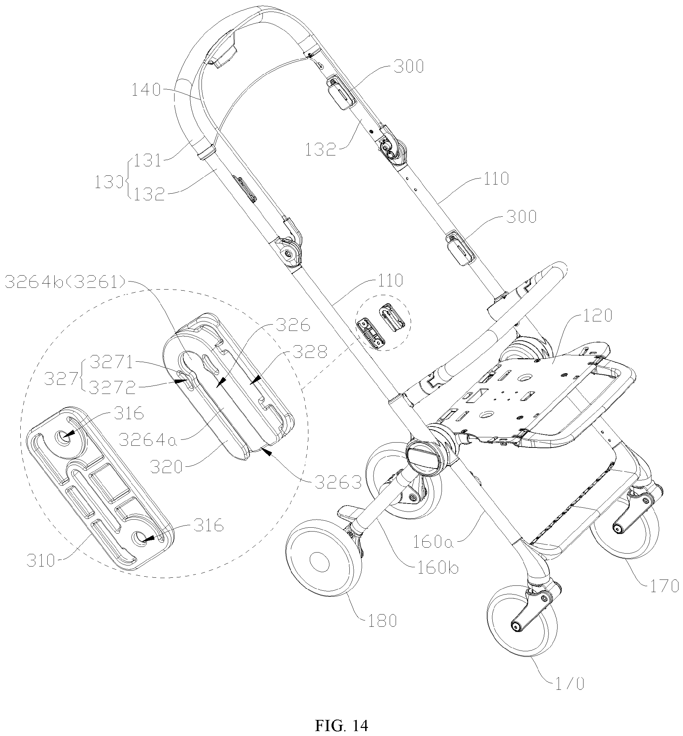

Referring to FIG. 13 and FIG. 14, in order to improve stability and reliability of the connection between the engaging member 320 and the cover assembly 200, in this embodiment, the connecting perforation 328 is a waist-shaped hole, and an extension direction of the connecting perforation 328 is generally parallel to a sliding direction of the limiting protrusion 315 relative to the mounting slot 326. To prevent interference occurring when the engaging member 320 is connected to the cover assembly 200 through the connecting perforation 328, in this embodiment, the connecting perforation 328 is located on a side portion of the engaging member 320, and the connecting perforation 328 may be regarded as being parallel to the first groove section 3264a and located outside of the first groove section 3264a. Certainly, in other embodiments, the connecting perforation 328 may alternatively be in other shapes. In addition, the position of the connecting perforation 328 may also be referred to the position of the connecting perforation 328 in the second embodiment.

Specifically, in this embodiment, as shown in FIG. 12 and FIG. 13, the fixing base 310 is provided with two mounting holes 316 in a length direction thereof, which helps improve the stability of the mounting of the fixing base 310 to the frame 100. More specifically, compared to the first embodiment, in this embodiment, the frame 100 is also provided with the concave section 111 at a position for connection with the fixing base 310, and the two mounting holes 316 are configured to allow fasteners to pass through to mount the fixing base 310 in the concave section 111 of the frame 100. Certainly, in other embodiments, the concave section 111 on the frame 100 may be omitted.

In this embodiment, the above cover connection structures 300 are provided between the two first cover portions 230 and both the handlebars 110 and the push handle rods 132 on corresponding sides.

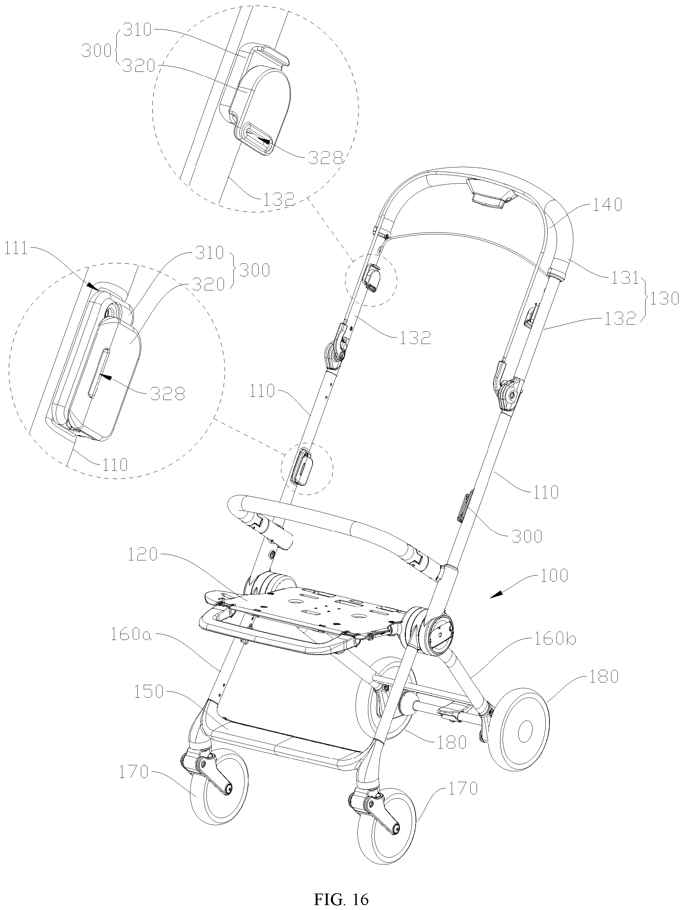

FIG. 16 is a perspective view of a carrier provided according to a fourth embodiment of the present disclosure, with the cover assembly 200 removed. The carrier may include a frame 100, a cover assembly 200 (which can be referred to the relevant drawings in the first embodiment), and a cover connection structure 300. The carrier in this embodiment is a varation of the carriers in the second embodiment and the third embodiment above. Unless there is a conflict, structures of the components and the connection relationships between the components in this embodiment can be referred to the description in the second embodiment and the third embodiment above. The following mainly describes the differences between this embodiment and the second embodiment and the third embodiment above.

In this embodiment, the cover connection structures 300 included in the carrier includes two structures. Specifically, the cover connection structures 300 in the second embodiment above are provided between the two first cover portions 230 and the push handle rods 132 on corresponding sides thereto. At the same time, the cover connection structures 300 in the third embodiment above are provided between the two first cover portions 230 and the handlebars 110 on corresponding sides thereto. In other words, for the first cover portion 230 on one side, a proximal upper-end region of the first cover portion 230 is connected to the frame 100 through the cover connection structure 300 shown in the second embodiment (which may be referred to as a first cover connection structure 300), and a proximal lower-end region of the first cover portion 230 is connected to the frame 100 through the cover connection structure 300 shown in the third embodiment (which may be referred to as a second cover connection structure 300). When the first cover portion 230 is connected to the frame 100, flatness of the first cover portion 230 on one side may be adjusted by rotating the engaging member 320 in the first cover connection structure 300, preventing distortion after the first cover portion 230 is connected to the frame 100.

It is to be noted that, in other embodiments, the cover connection structures 300 in the third embodiment above may be provided between the two first cover portions 230 and the push handle rods 132 on corresponding sides thereto. At the same time, the cover connection structures 300 in the second embodiment above may be provided between the two first cover portions 230 and the handlebars 110 on corresponding sides thereto. In other words, for the first cover portion 230 on one side, the proximal upper-end region of the first cover portion 230 may be connected to the frame 100 through the second cover connection structure 300, and the proximal lower-end region of the first cover portion 230 may be connected to the frame 100 through the first cover connection structure 300.

The above cover connection structures 300 and the carrier have at least the following technical effects.

The above carrier includes the cover connection structures 300. In the cover connection structure 300, the fixing base 310 is provided on the frame 100, the engaging member 320 is provided on the cover assembly 200, and detachable mounting of the cover assembly 200 onto the frame 100 is realized by movable engagement of the engaging member 320 with the fixing base 310. The cover connection structure 300 is simple in structure, making detachment and installation convenient.

## Claims

1. A cover connection structure (300) for a carrier comprising a frame (100) and a cover assembly (200), the cover connection structure (300) comprising:
a fixing base (310) configured to be disposed on the frame (100); and
an engaging member (320) configured to be disposed on the cover assembly (200);
wherein the fixing base (310) is movably engaged with the engaging member (320) to allow the cover assembly (200) to be detachably mounted onto the fixing base (310).

2. The cover connection structure (300) according to claim 1, wherein the fixing base (310) is provided with a sliding groove (313), and the engaging member (320) is insertable into the sliding groove (313).

3. The cover connection structure (300) according to claim 2, wherein one of the sliding groove (313) and the engaging member (320) is provided with a protruding portion (314), the other one of the sliding groove (313) and the engaging member (320) is provided with a recessed portion (323), and when the engaging member (320) is inserted into the sliding groove (313), the protruding portion (314) is engaged with the recessed portion (323).

4. The cover connection structure (300) according to claim 2 or 3, wherein the sliding groove (313) comprises a first groove portion (3131), wherein two second groove portions (3132) are respectively provided on two opposite side walls of the first groove portion (3131), the first groove portion (3131) and the two second groove portions (3132) extend through one side of the fixing base (310) to form a T-shaped insertion port (3133), the engaging member (320) is insertable into the sliding groove (313) through the insertion port (3133), and two opposite first edges (321) of the engaging member (320) are respectively insertable into the two second groove portions (3132).

5. The cover connection structure (300) according to claim 4, wherein the first groove portion (3131) has an abutting edge (3131a) opposite to the insertion port (3133), the engaging member (320) has two opposite second edges (322), each of the second edges (322) is connected between the two first edges (321), and when the engaging member (320) is inserted into the sliding groove (313), one of the second edges (322) abuts against the abutting edge (3131a).

6. The cover connection structure (300) according to any one of the preceding claims, wherein one of the fixing base (310) and the engaging member (320) is provided with a limiting protrusion (315), the other one of the fixing base (310) and the engaging member (320) is provided with a mounting slot (326), one end of the mounting slot (326) extends through the fixing base (310) or the engaging member (320), and the mounting slot (326) is capable of being slidably sleeved outside the limiting protrusion (315) to movably engage the fixing base (310) with the engaging member (320).

7. The cover connection structure (300) according to claim 6, wherein
the fixing base (310) is provided with the limiting protrusion (315), the limiting protrusion (315) comprises a first convex portion (3151) and a second convex portion (3152) connected to each other, the second convex portion (3152) protrudes relative to a periphery of the first convex portion (3151) to form a limiting edge (3153), the first convex portion (3151) is connected to the fixing base (310), and the second convex portion (3152) and the fixing base (310) are spaced apart to form a limiting concave portion (3154);
the engaging member (320) is provided with the mounting slot (326), the mounting slot (326) comprises a first groove body (3261) and a second groove body (3262) disposed on a periphery of the first groove body (3261) and in communication with the first groove body (3261), both the first groove body (3261) and the second groove body (3262) extend through one end of the engaging member (320) to form a T-shaped mounting port (3263), and the engaging member (320) is capable of being slidably sleeved outside the limiting protrusion (315) through the mounting port (3263); and wherein, when the mounting slot (326) is engaged with the limiting protrusion (315), the limiting edge (3153) is positioned in the second groove body (3262), and a side wall of the second groove body (3262) is positioned in the limiting concave portion (3154).

8. The cover connection structure (300) according to claim 7, wherein the engaging member (320) is provided with a limiting structure (327), and when the engaging member (320) is operated to engage the mounting slot (326) with the limiting protrusion (315), the limiting protrusion (315) overcomes the limiting structure (327) and moves from the mounting port (3263) into the mounting slot (326).

9. The cover connection structure (300) according to claim 8, wherein the limiting structure (327) comprises:
a limiting portion (3271) disposed on one or both of opposite side walls of the first groove body (3261); and
a hollow out portion (3272) disposed at positions of the one or both of opposite side walls of the first groove body (3261) corresponding to the limiting portion (3271);
wherein, when the limiting portion (3271) is pressed by the limiting protrusion (315), the limiting portion (3271) moves toward the hollow out portion (3272), causing the limiting portion (3271) to elastically deform.

10. The cover connection structure (300) according to claim 9, wherein the first convex portion (3151) is provided with an inwardly concave notch (31511), and the notch (31511) is configured to engage with the limiting portion (3271) on the engaging member (320) when the mounting slot (326) is engaged with the limiting protrusion (315).

11. The cover connection structure (300) according to any one of claims 7 to 10, wherein the first convex portion (3151) and the second convex portion (3152) each have a circular structure;
the first groove body (3261) and the second groove body (3262) each comprise an elongated first groove section (3264a) and an arc-shaped second groove section (3264b), wherein one end of the first groove section (3264a) is in communication with the second groove section (3264b), and the other end of the first groove section (3264a) forms the mounting port (3263);
wherein, when the mounting slot (326) is engaged with the limiting protrusion (315), the limiting edge (3153) is positioned in the second groove section (3264b) of the second groove body (3262), and the engaging member (320) is capable rotating relative to the fixing base (310) by rotating the limiting protrusion (315) in the second groove section (3264b).

12. The cover connection structure (300) according to any one of claims 7 to 10, wherein the first convex portion (3151) and the second convex portion (3152) each have an elongated structure, and in extension directions of the first convex portion (3151) and the second convex portion (3152), top ends of the first convex portion (3151) and the second convex portion (3152) are arc-shaped;
the first groove body (3261) and the second groove body (3262) each comprise an elongated first groove section (3264a) and an arc-shaped second groove section (3264b), one end of the first groove section (3264a) is in communication with the second groove section (3264b), and the other end of the first groove section (3264a) forms the mounting port (3263), and the second groove section (3264b) of the second groove body (3262) has an abutting edge (3131a) opposite to the mounting port (3263); when the mounting slot (326) is engaged with the limiting protrusion (315), the top end of the second convex portion (3152) abuts against the abutting edge (3131a), and the limiting edge (3153) is positioned in the first groove section (3264a) and the second groove section (3264b) of the second groove body (3262).

13. A carrier, comprising:
a frame (100);
a cover assembly (200) covering the frame; and
the cover connection structure (300) according to any one of claims 1 to 12;
wherein the fixing base (310) is movably engaged with the engaging member (320) to allow the cover assembly (200) to be detachably mounted onto the frame (100).

14. The carrier according to claim 13, wherein the frame (100) is provided with a concave section (111), and the fixing base (310) is mounted within the concave section (111).

15. The carrier according to claim 13 or 14, wherein the engaging member (320) has a connecting portion (324), the connecting portion (324) is provided with a groove (325), a bottom of the groove (325) is provided with a sewing hole (3251), and a sewing thread passes through the cover assembly (200) and the sewing hole (3251) to sew the cover assembly (200) to the engaging member (320).
